# EUROPEAN PATENT APPLICATION

(11) **EP 1 184 818 A1**
(43) Date of publication of application: **06.03.2002**
(21) Application number: 00118954.7
(22) Date of filing: 01.09.2000
(51) Int. Cl.: G07F 5/18, G07F 7/02

(54) **Vending system for selling products or services to purchasers having mobile communicators**

(71) Applicant: Marconi Commerce Systems S.r.L., 50145 Firenze (IT)
(72) Inventor: Carapelli, Giovanni, 50142 Firenze (IT)
(74) Representative: Fitchett, Stuart Paul

(57) **Abstract**

The present invention described a vending system for selling products or services to purchasers having mobile communicators enabled to a wireless internet connection, comprising:
- means to permit a customer to communicate to an operator, via an internet connection, the identity of a vending machine;
- means by which the operator can authorise via the Internet connection an identified vending machine to make a sale to the purchaser;
- means to notify said purchaser via the internet connection.

## Description

### Background of the art

At present several vending systems are already known, in particular the so called "self service" systems by which a purchaser is able to buy a product or a service and to pay by his credit/debit card.

More recently, vending system based on the use of cellular phones have been proposed.

In respect of the previous vending systems, the "cellular" systems present many advantages due to the fact that cellular phones are world wide utilised, so that such vending systems can potentially interest a lot of customers.

Unfortunately, in the known systems a customer is not able to "communicate" with the system, in the sense that the cellular link can be utilised by the user only to give instruction without any feedback to the user.

A further disadvantage is that in these systems the customer has necessarily to transmit his private data (generally the credit card number) to the vending system.

A still further disadvantage is that the capability of a user to access a cellular based vending system depends on the communication standard utilised and on the cellular phone owned by the customer.

Then, it is very difficult for a vending operator to reach all the potential customers (and vice versa) without a lot of difficulties (special agreements with the cellular network providers, specific smart cards) and other problems like these.

Furthermore, in the known systems a considerable cost is given by the user interface which is needed at the vending machines in order to permit the user to properly interact with the system.

### Aim of the invention

A first aim of the invention is to overcome the drawbacks of the already known vending systems.

A second aim is to provide an easy-to-use system allowing mobile phone owners to purchase in real time goods and services in a secure manner.

### Summary of the invention

These aims have been reached according to the invention by a system according to the annexed claims.

### List of drawings

The advantages of by the present invention will be evident from the following specification and from the annexed drawings, given as non limiting examples, in which:

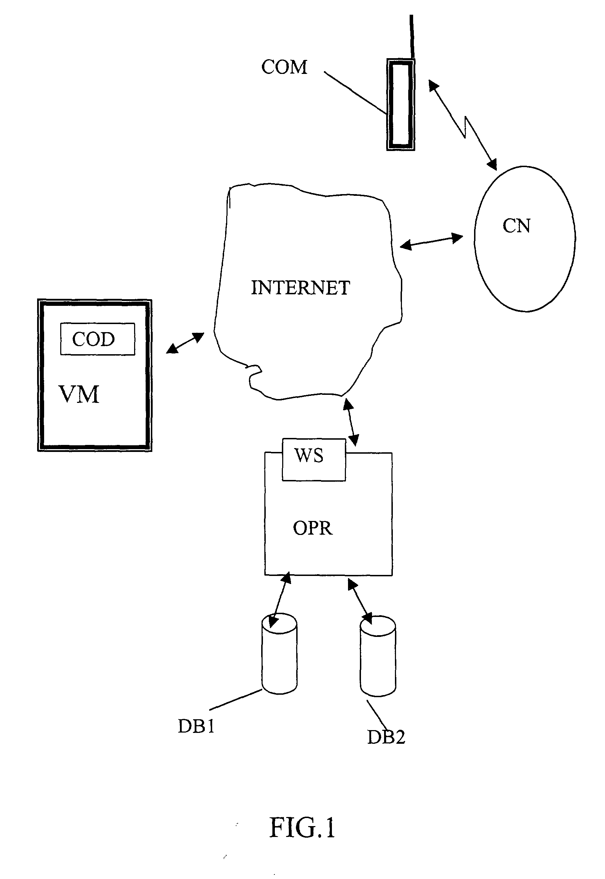

- Figures 1 - 7 show different preferred embodiments of the invention.

### Detailed description

With reference to the annexed drawings a vending system according to the invention comprises:
- at least a vending machine VM provided with an Internet connection IC;
- an internet operator OPR able to communicate via the Internet with the vending machines and with a customer provided with a digital mobile communicator COM enabled to a wireless bi-directional connection supporting the Internet Protocol.

Preferably, the communicator is a WAP (Wireless Application Protocol) enabled cellular phone capable to be connected to the internet by a network access point, for example a digital cellular network CN.

In the embodiment of Figure1 the vending machines is provided of a code COD which the purchaser can read when he is in the vicinity of the vending machine, it being for example visualised by a display of the machine.

Preferably, a different code can be automatically assigned by the operator to the machine at specified time, for example after each transaction, in order to avoid accidental purchase orders from a customer as it can happen in the conventional systems where a phone number of the vending machine has to be dialled by the customer to purchase a product or a service.

The site operator OPR is provided with a first database DB1 containing identifying data of the vending machines of the system and with a second database DB2 containing identifying data of customers authorised to the purchase.

Preferably, said first identifying data comprise the vending machines identity numbers ID, said codes COD and the Internet addresses of the vending machines.

The identifying data of DB2 comprise in particular customer identity numbers and other account data which can be utilised to authorise a purchase to that customer.

According to the invention, when a purchaser having a suitable communicator is in the vicinity of a vending machine he can read the identifying code corresponding to that machine and connect the Internet through a network access point in order to communicate with the operator OPR by a web server WS of the operator which is preferably visualised as an internet "bookmark" on a display of the customer communicator.

In this phase, the communicator transmits to the WS a customer ID so that the operator can verify whether the customer is a purchaser already identified in the second database DB2.

Once the purchaser identity has been verified the operator ask the customer to transmit the corresponding code COD of the machine.

The operator receives the code COD and associates it to the corresponding IP address of the vending machine, both contained in the data base DB1, so that it can check, for example, the functioning state of the vending machine and to authorise the machine to a sale.

Accordingly, the vending machine will be commanded by the operator to supply the requested product or service after that the purchaser will be invoiced of the corresponding cost and a message of successful end of the sale procedure will be possibly displayed on the communicator display for example in the form of a SMS message which will act as a receipt of the transaction.

Advantageously, the communication to and from the operator and to and from the communicator are protected by encryption codes (for example SSL) and hence all the connected devices communicate in a secure manner for example through a Public key infrastructure (PKI)

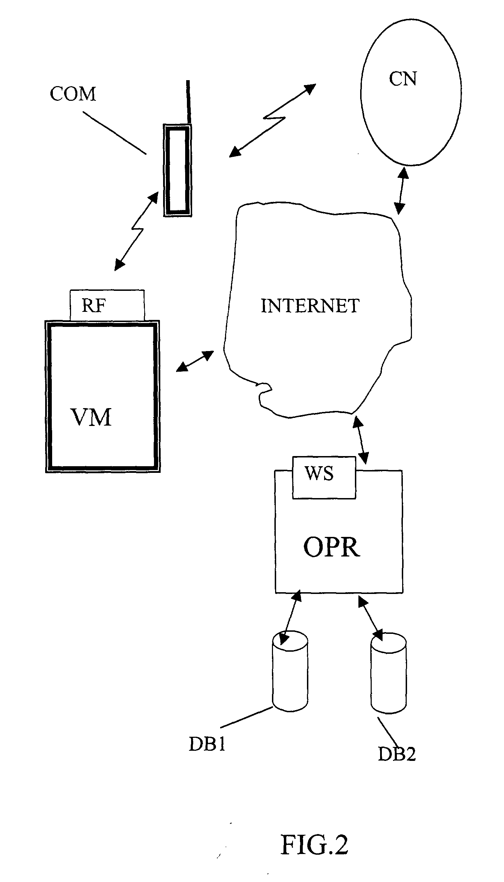

Figure2 shows a second embodiment of the system, where the vending machine VM is provided with a bi-directional radio frequency interface RF supporting a communication based on Internet protocol.

Preferably, in this embodiment the wireless connection RF is able to automatically connect the communicator when the customer is close to the vending machine.

For example, a suitable interface RF is a Bluetooth™ enabled interface and a suitable communicator is a WAP/Bluetooth™ enabled cellular phone.

Advantageously, in this embodiment the interface automatically transmits the code COD to the customer so that connected through the internet with the WS, the customer will have only to ask a desired product.

As a further advantage, in this case the vending machine does not need a display nor a printer to supply a receipt (given by the system in the form of a SMS message on the user handset) and the user interface can be completely housed by the customer communicator handset.

A still further advantage consists in that in this embodiment of the system a vending machine is substantially maintenance-free and guaranteed from damages due to vandals.

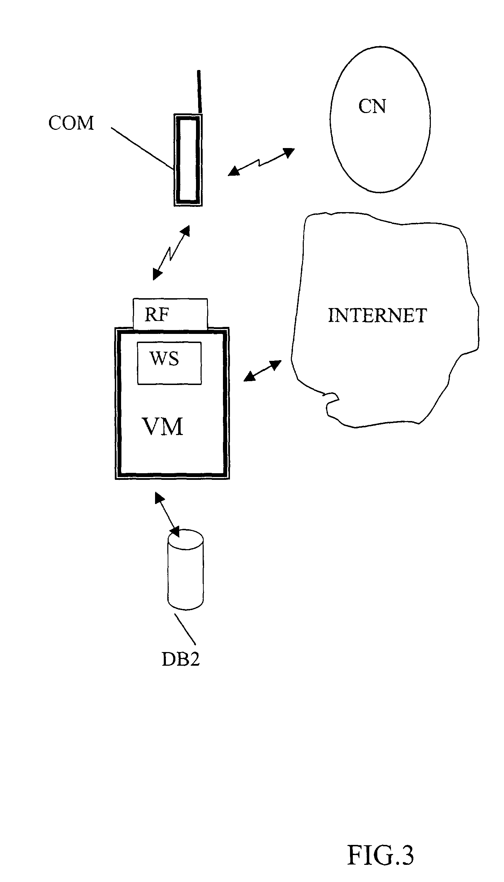

Figure 3 shows a further embodiment of the system, where the web server WS of the operator is located at the vending machine and the customer communicates directly with the vending machine which can be provided with a customer database DB2.

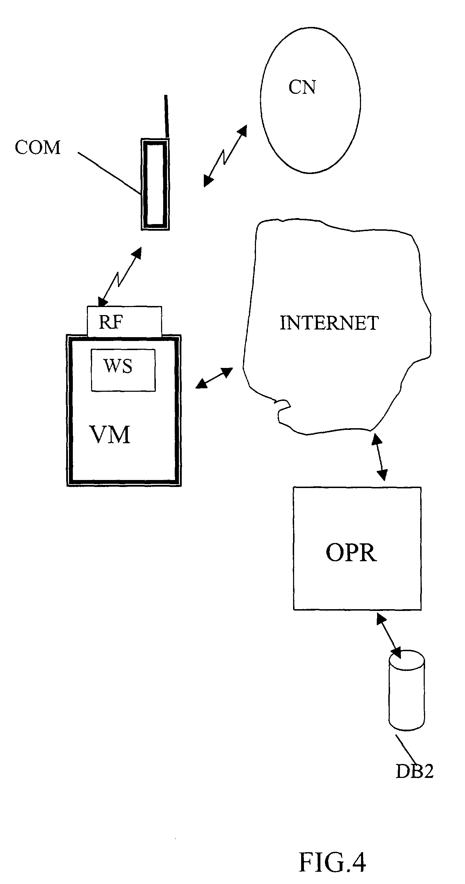

With this solution there is no need of a remote operator except for billing operations. Anyway, a remote operator can be foreseen (Figure 4) in case of a vending chain comprising several vending machines and a database DB1.

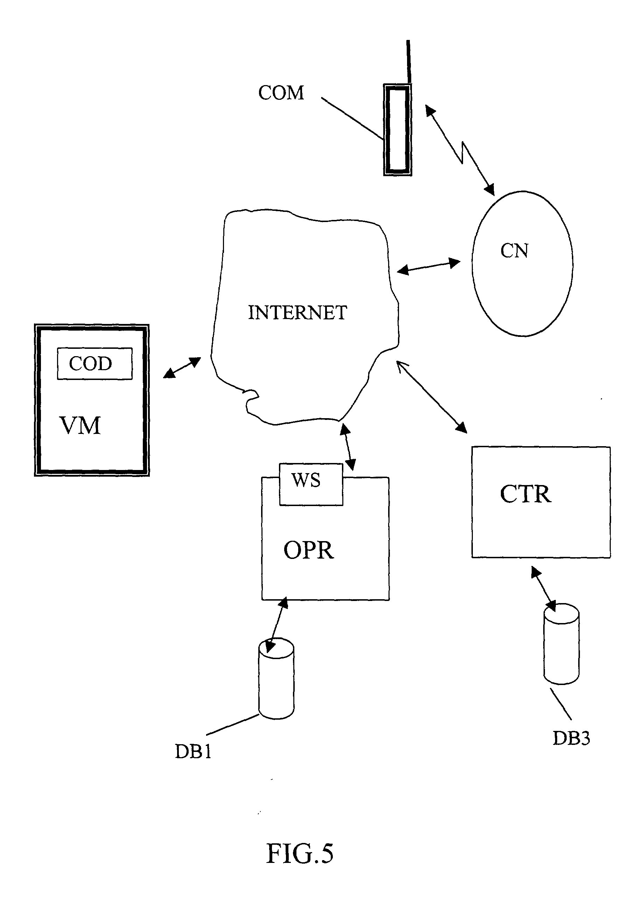

In Figure 5 a further embodiment of the invention is shown.

Advantageously, in this case the vending system is able to accept order of any Internet customer accessing the operator and there is no longer the need of the above mentioned customer database DB2.

In Figure 5 the network access point consists of a cellular network CN and an outside authorisation centre CTR is connected to the operator through the Internet and is provided of a database DB3 containing the identity numbers of the vending machines of the system.

According to this embodiment, the user can access the WS of the operator without transmitting his ID to the operator.

After that, the WS ask the user to communicate the code COD of the vending machine and then send back to the user an ID and the IP address of the vending machine associated to the COD.

The user is then able to contact the authorisation centre (for example a credit card supplier) transmitting his PIN code (for example the credit card number) together with the ID code and the IP address of the vending machine.

Once the credit has been verified the CTR communicate through the internet the authorisation to the operator which commands the identified vending machine to supply the requested product or service.

Advantageously, in this embodiment the user is guaranteed from possible fraudulent use of his data because the system does not receive any "private" data and the communication between user and authorisation centre can be encrypted by well known protocols (e.g. PPTP Internet protocol or SSL Secure Socket Layer).

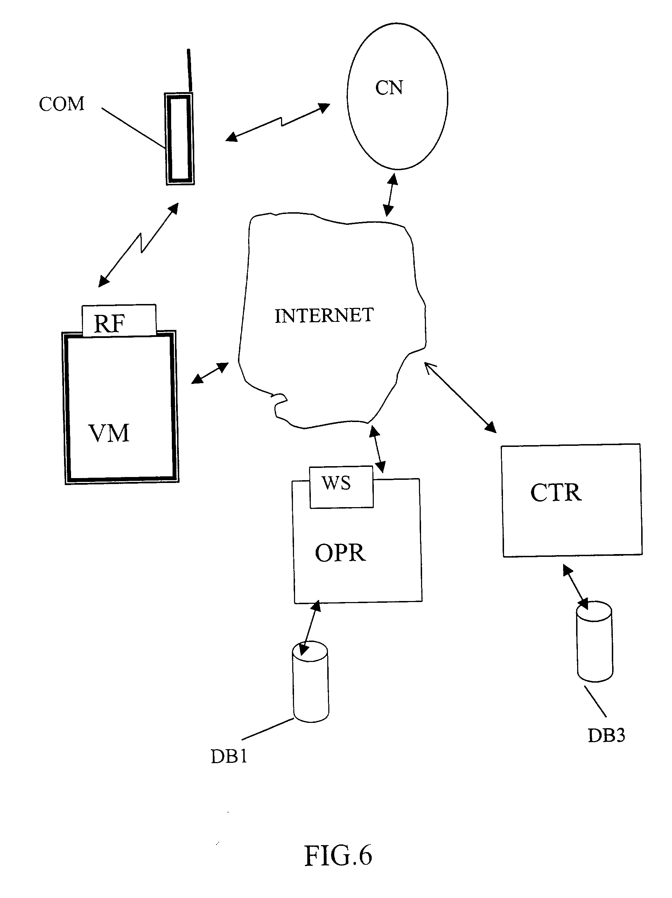

With reference to Figure 6 a system is shown which corresponds to the system of Figure 5 where a bi-directional radio frequency interface RF of the already discussed type is provided at the vending machine.

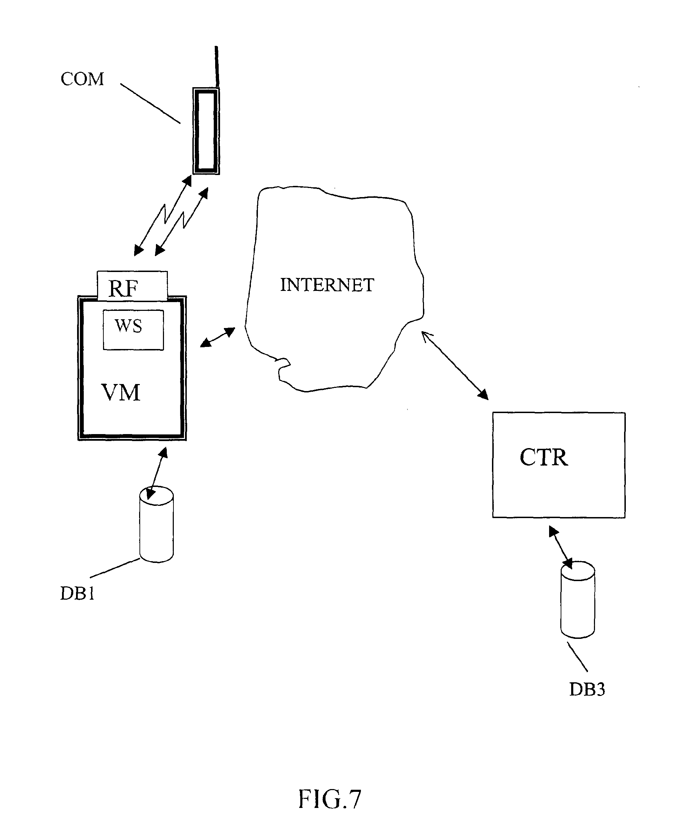

In Figure 7 a further embodiment of the system of Figure6 is shown, where the network access point NAP consists of the same RF interface of the vending machine connected to the internet through the IN connection.

In this case the user accesses the internet" " through" the RF interface and connect the WS of the operator which, in this case, has to be located at the vending machine.

In order to guarantee the user it is possible to restrict the internet access of the user only to the connection to certain IP addresses (for example a number of authorisation centres) and to encrypt these connections by suitable encryption protocols.

The present invention has been described with reference to preferred embodiments, anyway, equivalent modifications can be made without outgoing from the scope of the invention.

## Claims

**1.** Vending system for selling products or services to purchasers having mobile communicators enabled to a wireless internet connection, comprising:
- means to permit a customer to communicate to an operator, via an internet connection, the identity of a vending machine at which he is located;
- means by which the operator can authorise via the Internet connection an identified vending machine to make a sale to the purchaser;
- means to notify said purchaser via the internet connection.

**2.** System according to claim 1, wherein said means permitting the customer to communicate to an operator the identity of a vending machine consist of an identifying code (COD) of the vending machine at which the purchaser is located and transmitted by the purchaser to a web server (WS) of the operator through the internet connection.

**3.** System according to claim 2, wherein said means comprise a first database (DB1) of the operator containing said identifying codes (COD) and the corresponding internet addresses (IP) of the vending machines.

**4.** System according to claim 2 comprising means by which the operator may assign an identity code to the vending machine and change that code at specified time.

**5.** System according to claim 4, wherein said means are able to change said code after each purchase request from a customer.

**6.** System according to claim 1, wherein said means to notify the purchaser comprise a database (DB2) of the operator containing the identity codes of the authorised customers.

**7.** System according to at least one of claims 1-6, wherein said communicator is connected to the internet through a cellular network (CN).

**8.** System according to claim 3, wherein said means to permit a customer to communicate to an operator the identity of a vending machine comprise a radio frequency interface (RF) able to automatically establish a bi-directional communication link between said vending machine and said communicator and to automatically transmit to the customer an identity code (COD) when the customer is in the vicinity of the machine.

**9.** System according to claim 8, wherein said interface (RF) is able to connect the customer communicator to the internet.

**10.** System according to claim 2, wherein said web server (WS) is located at a vending machine.

**11.** System according to claim 2, wherein said web server (WS) is located at a remote position from said vending machine.

**12.** System according to claim 1, comprising means permitting a customer to transmit via the internet identifying data of a vending machine to an outside authorisation centre (CTR) and further means permitting said outside authorisation centre to notify via the internet the operator an authorisation to make a sale.

**13.** System according to claim 12 wherein said means consist of a database (DB3) of the authorisation centre containing the identifying codes (COD) of the vending machines.

**14.** System according to at least one of the preceding claims, comprising means able to encrypt the data transmitted.

**16.** System according to the preceding claims, wherein the system is a gas station system and said vending machines are fuel dispensers.
